# EUROPEAN PATENT SPECIFICATION

(11) **EP 0 292 569 B1**
(45) Date of publication and mention of the grant of the patent: **02.02.1994**
(21) Application number: 87907986.1
(22) Date of filing: 07.12.1987
(51) Int. Cl.: B01D 53/04

(54) **MIXED GAS SEPARATION APPARATUS UTILIZING PRESSURE SWING ADSORPTION**
VORRICHTUNG ZUR TRENNUNG VON GASGEMISCHEN DURCH DRUCKWECHSELADSORPTION
DISPOSITIF DE SEPARATION DE GAZ MELANGES PAR ADSORPTION A VARIATION DE PRESSION

(30) Priority: 08.12.1986 JP 292038/86
(43) Date of publication of application: 30.11.1988
(73) Proprietor: MITSUBISHI JUKOGYO KABUSHIKI KAISHA, Tokyo 100 (JP)
(72) Inventor: IZUMI, Jun Nagasaki Tech.Inst., Nagasaki-shi,Nagasaki Pref. 850 (JP); TANABE, Seiichi Mitsubishi Jukogyo K. K., Chiyoda-ku Tokyo 100 (JP); OSHIMA, K. Mitsubishi Jukogyo Kabushiki Kaisha, Chiyoda-ku Tokyo 100 0 (JP)
(74) Representative: Presting, Hans-Joachim, Dipl.-Ing.
(86) International application number: PCT/JP87/00944
(87) International publication number: WO 88/04195

(56) References cited:
- DE-A- 1 417 750
- JP-A- 5 830 322
- JP-A- 6 097 019

## Description

### TECHNICAL FIELD

The present invention relates to an apparatus for the separation of a gas mixture according to the first part of the claim.

### BACKGROUND ART

The typical prior examples of gas mixture separators utilizing pressure modulation (referred to as PSA hereafter) are disclosed in Japanese Patent Publication No. 20082/19970, Japanese Patent Provisional Publication No. 14070/19972, and Japanese Patent Provisional Publication No. 16874/1973. In any of the above prior arts, gases are separated from a mixture by: pressurizing an ingredient gas mixture with a suitable means, normally a gas compressor, to a certain pressure; then leading the mixture into adsorption towers that contain an adsorbent through valves.

A further prior art, DE-A-14 17 750, is mentioned which discloses an apparatus comprising a cylinder containing a movable piston for modulating the gas pressure in the cylinder and an adsorbent positioned between the cylinder head and the piston, the cylinder having an outlet for the unadsorbed gas component disposed at the cylinder head above the adsorbent and an inlet for said gas mixture disposed below the adsorbent.

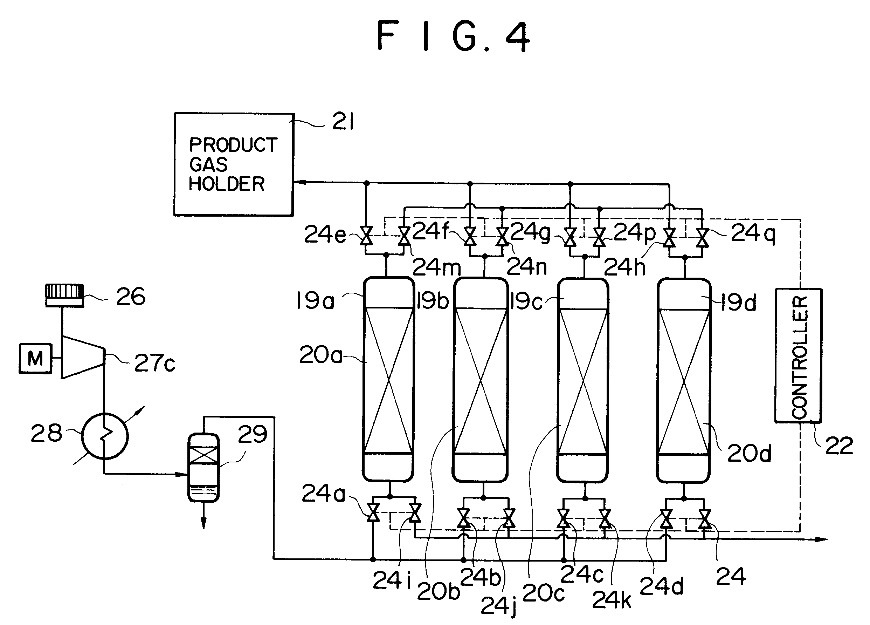

FIG. 4 shows, as an example, an air separator utilizing an adsorption method comparable with the before mentioned japanese prior art. According to this, after dust is removed from the air using an air filter 26, the air is pressurized to about 5 Kg/cm² by an air compressor 27, and the heat of compression is removed by a water cooler 28. Water is then removed by a water separator 29, and the air is led into adsorption towers 19a - 19d.

The adsorption towers 19a - 19d contain adsorbent 20a - 20d that is made of zeolite or the like having a filtering function. Of the air fed through valves 24a - 24d, only the product gas component passes through the adsorbent 20a - 20d and is led into a product gas holder 21 through valves 24e - 24h.

Since a large amount of the air, compared with the adsorptivity of the adsorbent 20a - 20d, is fed, it is necessary to desorb by depressurization in order to recover adsorptivity, followed by discharge of the waste air through valves 24i - 24ℓ.

Thus, to supply the product gas continuously, it is necessary to carry out adsorption under high pressure and desorption under low pressure periodically, and this requires at least two adsorption towers. Here, an example with 4 towers is shown. Also, 24m - 24q in FIG. 4 are pressure equalization valves. The valves 24a - 24q are controlled by a controller 22 to ensure smooth adsorption and desorption.

In order to make the air separator of FIG. 4 more economical, a cost reduction in equipment and in operation has to be achieved through a size reduction and an increase in operational efficiency.

To reduce equipment costs a reduction in time per cycle would be effective, and to achieve a higher efficiency a reduction in required power during pressurization and depressurization processes would be desirable.

### DISCLOSURE OF INVENTION

It is therefore the object of the present invention to provide a gas mixture separator utilizing pressure modulation that is economically superior to the prior devices and makes possible a large reduction in power consumption.

To achieve the above object the principle disclosed in the afore mentioned DE-A-14 17 750 was further developed. Thus the present invention is characterized by the features disclosed in the second part of the claim.

According to the above construction, the pressurization energy formerly required in the beginning of the adsorption process and the depressurization energy formerly wasted during the desorption process are mechanically recycled. Hence, the power consumption is greatly reduced, and the cost of equipment is also reduced.

### BRIEF DESCRIPTION OF DRAWINGS

FIGS. 1 and 2 show diagrams for an embodiment of the gas mixture separator utilizing pressure modulation of the present invention.

FIG. 3 is a time chart explaining the operation of the embodiment of FIG. 2.

FIG. 4 shows a diagram of a prior art device.

### BEST MODE FOR CARRYING OUT THE INVENTION

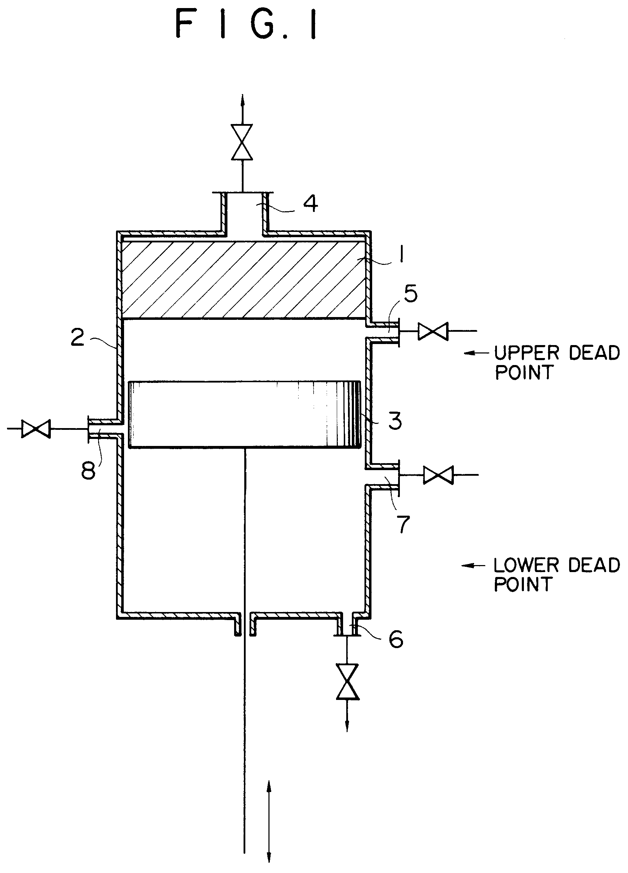

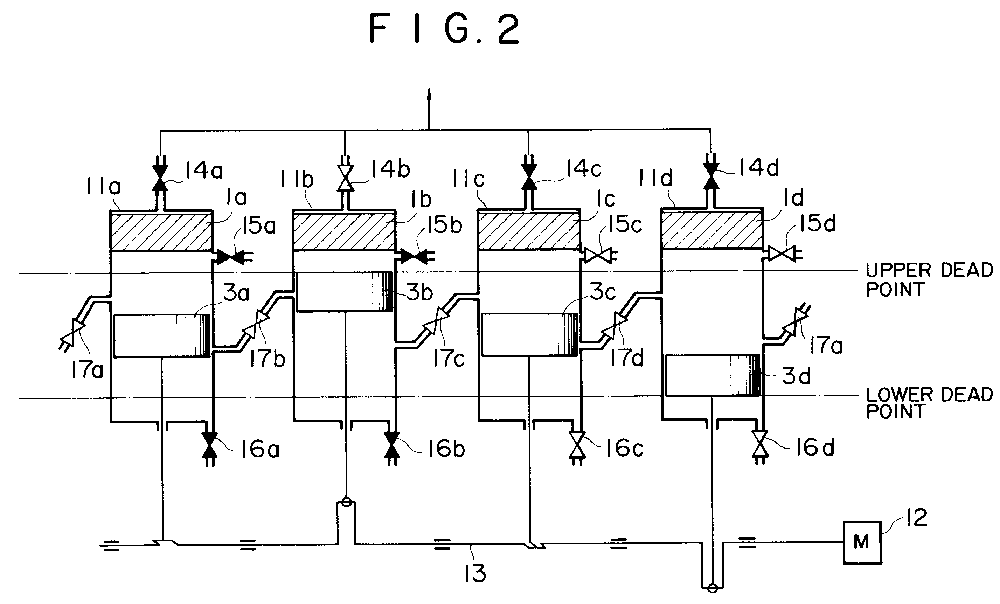

FIGS. 1 and 2 show diagrams for a gas mixture separator utilizing pressure modulation of the present invention. In FIG. 1 adsorbent 1 is disposed between the upper end of a cylinder 2 (i.e., the head of a cylinder 2) and a piston 3, and pressure modulation is obtained through the back and forth motion of a piston 3. Gas inlets and outlets 4 - 8 are placed in the cylinder 2 and play the following roles: 4 is an outlet for the unadsorbed gas component, 5 an inlet for the ingredient gas, 6 an outlet for the adsorbed gas component, 7 an inlet for the adsorbed gas component, and 8 an outlet for the adsorbed gas component. In this construction, the air compressor 27 and the pressure controlling valves 24a - 24ℓ at the inlets and outlets of the adsorption towers 19a - 19d, which appear in the prior art, can be removed.

FIG. 2 shows a parallel array of four adsorption towers of the gas mixture separator utilizing pressure modulation shown in FIG. 1, and they are staggered by a quarter of the period of a cycle in operational timing. In FIG. 2, 11 denotes piston type adsorption towers, 12 an electric motor or the like for driving pistons, 13 a crank shaft, 14 valves located in the unadsorbed gas exhaust system, 15 valves located in the ingredient gas inlet system, 16 valves located in the adsorbed gas exhaust system, and 17 valves located in the adsorbed gas transfer system, and a, b, c and d denote each of the four towers staggered by a quarter of the cycle time in its operational cycle.

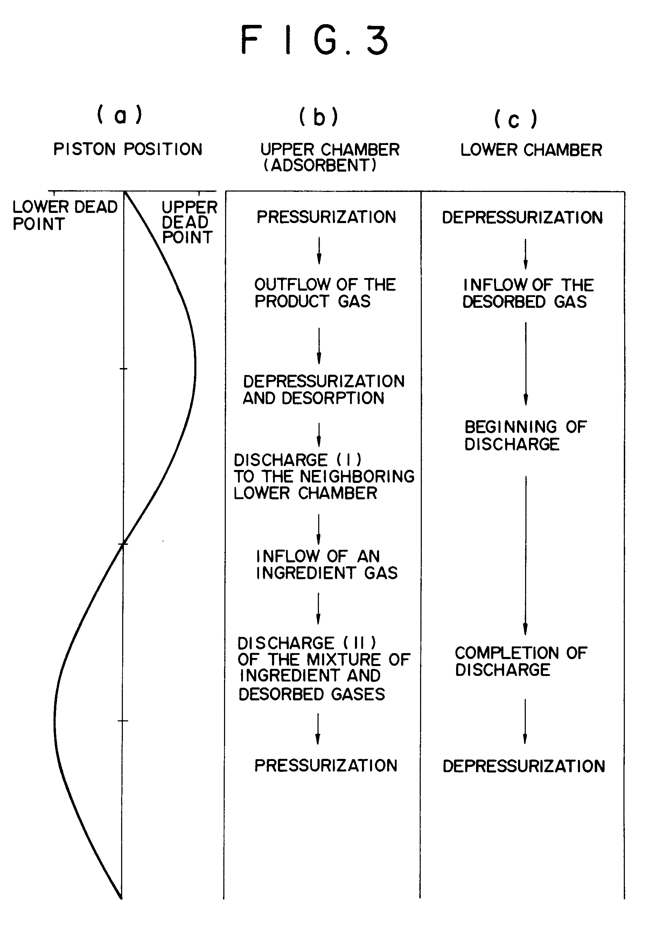

Furthermore, the time chart of FIG. 3 shows the operation of the gas mixture separator utilizing pressure modulation thus constructed. At the time shown in FIG. 3 when the upper chamber is pressurized and the lower chamber is depressurized again, the operational situation is as shown by the leftmost gas mixture separator tower in FIG. 2, denoted by a. In this case, a piston 3 is in the central position, while valves 14a, 15a and 16a are closed and valves 17a, 17b are open. From this situation the piston 3a is moved toward the upper dead point by a motor 12 for driving the pistons. The second tower from the left, denoted by b, shows the situation in which the piston 3b has reached the upper dead point after driving out the product gas. Here, only valves 15b and 16b are closed, other valves 14b, 17b, 17c are open. Similarly, the situation of depressurization and desorption in FIG. 3 corresponds to the third tower from the left denoted by c in FIG. 2, and the discharged situation in FIG. 3 corresponds to the rightmost tower denoted by d in FIG. 2.

Based on the above description and FIGS. 1 to 3, the operation of the embodiment is summarized as follows.
(1) In the upper chamber of the first tower:
   - [Step 1]: The gas introduced (ingredient gas) is pressurized.
   - [Step 2]: Oxygen, which cannot be easily adsorbed, is discharged from the system through the gas outlet 4 and the valve 14a as a product gas.
   - [Step 3]: The piston 3a reaches the upper dead point.
   - [ Step 4 ]: As the piston goes down, the pressure in the upper chamber decreases and the gas adsorbed on the adsorbent desorbes to fill the upper chamber.
   - [Step 5]: The valve 17a connecting to the lower chamber below the piston 3d in the neighboring cylinder d opens up and a part of desorbed gas moves to the lower chamber of the neighboring cylinder.
   - [Step 6]: After the transfer of the desorbed gas between the cylinders is completed, the inlet 5 and connecting valve 15a become open so that the ingredient gas is automatically introduced into the system as the piston 3a goes down.
   - [Step 7]: The piston 3a reaches the lower dead point and discharge of the mixture of ingredient and desorbed gases takes place via valve 16a.
   - [Step 8]: As the piston 3a moves up, the ingredient gas is pressurized and the cycle completes to step 1 described above.
(2) In the lower chamber of the first tower:
   - [Step 1]: While a small amount of desorbed gas remains, the pressure decreases as the piston moves up.
   - [Step 2]: By connecting to the upper chamber above the piston in the neighboring cylinder b, the desorbed gas flows into the lower chamber in the cylinder a, in which pressure is lower.
   - [Step 3]: The piston 3a reaches the upper dead point.
   - [Step 4]: The desorbed gas stored in the lower chamber is pressurized and discharged out of the system through the lower port 6 and the valve 16a when the pressure exceeds a certain value.
   - [Step 5]: The piston 3a reaches the lower dead point, and the discharge of the gas rich in the desorbed gas finishes.
   - [Step 6]: The inner pressure decreases as the piston 3a goes up. The operation continues to step 1 above and completes one cycle.
(3) The second to fourth towers operate in the same manner as above with a time delay of a quarter cycle between the neighboring towers. This is shown best in FIG. 2.

According to the embodiment of the present invention explained above, the following effects are obtained:
(1) The pressurization energy formerly required at the beginning of the adsorption process and the depressurization energy formerly wasted during the desorption process are mechanically recycled. Hence, the power consumption is greatly reduced (about 5 - 30%), and the cost of equipment is also reduced.
(2) The period of a cycle can be vastly shortened, for example, from 60 sec. formerly to 0.6 sec., and thus the amount of adsorbent required is reduced to about 1/50 making the system compact and reducing the cost of equipment. In the prior art, the valves themselves control the pressure, and it has been difficult to shorten the period of a cycle for speeding the operation up because of economical problems associated with the durability of the valves. In contrast to the prior art, since the pressure is controlled by the cylinder 2 and piston 3, which are more durable than valves, it is now possible to shorten the period of a cycle in the present embodiment.

Also, though not described in the above embodiment, the valves 17 in FIG. 2 can be replaced by a system in which a piston itself acts also as a valve.

### INDUSTRIAL APPLICABILITY

The present invention described above offers a gas mixture separator utilizing pressure modulation that makes possible great reductions in the power required for operation and in the cost of equipment.

## Claims

1. An apparatus for the separation of a gas mixture comprising a cylinder (2) containing a movable piston (3) for modulating the gas pressure in the cylinder (2) and an adsorbent (1) positioned between the cylinder head and the piston (3), the cylinder (2) having an outlet (4) for the unadsorbed gas component disposed at the cylinder head above the adsorbent and an inlet (5) for said gas mixture disposed below the adsorbent, said apparatus being characterized,
in that it contains **four**
of said cylinders (2) of substantially the same construction,
in that said inlet (5) for said gas mixture is disposed between the upper dead point of the piston motion and the adsorbent (1),
in that each cylinder (2) further has a first outlet (8) for desorbed gas leading to another cylinder (2) and being disposed between the lower dead point of the piston motion and the adsorbent,
in that each cylinder (2) further has a second outlet (6) for desorbed gas disposed at the cylinder end opposite to the head of the cylinder,
in that each cylinder (2) further has an inlet (7) for desorbed gas coming from a third cylinder (2) via the first outlet (8) for desorbed gas of this one and being disposed between the first outlet (8) for desorbed gas and the second outlet (6) for desorbed gas
and in that the piston motion of all the cylinders (2) of the apparatus is mechanically connected via a crank shaft (13) in such a way that the operational cycles of the cylinders (2), which have the same period, are staggered in periods of a **quarter** of the total operational cycle.

## Patentansprüche

1. Vorrichtung zur Trennung eines Gasgemischs mit einem Zylinder (2), der zur Abstimmung des Gasdrucks in dem Zylinder (2) einen beweglichen Kolben (3) enthält und einem Adsorbens (81), das zwischen dem Zylinderkopf und dem Kolben (3) positioniert ist, wobei der Zylinder (2) einen Auslaß (4) für die nicht adsorbierte Gaskomponente, der an dem Zylinderkopf über dem Adsorbens angeordnet ist, und einen Einlaß (5) für das Gasgemisch, der unterhalb des Adsorbens angeordnet ist, aufweist,
dadurch gekennzeichnet,
daß die Vorrichtung vier Zylinder (2) umfaßt, welche im wesentlichen die gleiche Konstruktion aufweisen,
daß der Einlaß (5) für das Gasgemisch zwischen dem oberen Totpunkt der Kolbenbewegung und dem Adsorbens (1) angeordnet ist,
daß jeder Zylinder (2) weiterhin einen ersten Auslaß (8) hat, um desorbiertes Gas zu einem anderen Zylinder (2) zu führen und welcher zwischen dem unteren Totpunkt der Kolbenbewegung und dem Adsorbens angeordnet ist,
daß jeder Zylinder (2) weiterhin einen zweiten Auslaß (6) für desorbiertes Gas hat, welcher an dem Zylinderende gegenüber dem Kopf des Zylinders angeordnet ist,
daß jeder Zylinder (2) weiterhin einen Einlaß (7) für desorbiertes Gas hat, welches von einem dritten Zylinder (2) über den ersten Auslaß (8) für desorbiertes Gas von diesem kommt, und welcher zwischen dem ersten Auslaß (8) für desorbiertes Gas und dem zweiten Auslaß (6) für desorbiertes Gas angeordnet ist und
daß die Kolbenbewegung von allen Zylindern (2) der Vorrichtung über eine Kurbelwelle (13) derart mechanisch gekoppelt ist, daß die Operationszyklen der Zylinder (2), welche die gleiche Periode haben, in Perioden von einem Viertel des gesamten Operationszyklus gestaffelt sind.

## Revendications

1. Appareil pour la séparation d'un mélange de gaz, comprenant un cylindre (2), contenant un piston déplaçable (3) pour moduler la pression du gaz dans le cylindre (2), et un adsorbant (1) disposé entre la tête de cylindre et le piston (3), le cylindre (2) ayant une sortie (4) pour le composant de gaz non adsorbé, disposée dans la tête de cylindre au-dessus de l'adsorbant, et une entrée (5) pour ledit mélange de gaz disposée au-dessous de l'adsorbant, ledit appareil étant caractérisé,
en ce qu'il contient quatre desdits cylindres (2) de réalisation sensiblement identique,
en ce que ladite entrée (5) pour ledit mélange de gaz est disposée entre le point mort haut du piston mobile et l'adsorbant (1),
en ce que chaque cylindre (2) présente de plus une première sortie (8) pour le gaz désorbé menant à un autre cylindre (2), et étant disposée entre le point mort bas du piston mobile et l'adsorbant;
en ce que chaque cylindre (2) présente de plus une seconde sortie (6) pour le gaz désorbé disposée à l'extrémité du cylindre opposée à la tête du cylindre,
en ce que chaque cylindre (2) présente de plus une entrée (7) pour le gaz désorbé venant d'un troisième cylindre (2), via la première sortie (8) pour le gaz désorbé de celui-là, et étant disposée entre la première sortie (8) pour le gaz désorbé et la seconde sortie (6) pour le gaz désorbé, et
en ce que le mouvement du piston de tous les cylindres (2) de l'appareil est relié mécaniquement via un vilebrequin (13) de telle façon que les cycles de fonctionnement des cylindres (2), qui ont la même période, soient décalés sur des périodes du quart du cycle de fonctionnement total.
